# EUROPEAN PATENT SPECIFICATION

(11) **EP 4 652 099 B1**
(45) Date of publication and mention of the grant of the patent: **28.10.2026**
(21) Application number: 24718619.0
(22) Date of filing: 16.01.2024
(51) Int. Cl.: B64C 1/14

(54) **A CANOPY MECHANISM**
KABINENDACH MECHANISMUS
MÉCANISME DE DÔME DE CABINE

(30) Priority: 18.01.2023 TR 202300610
(43) Date of publication of application: 26.11.2025
(73) Proprietor: Tusas- Turk Havacilik Ve Uzay Sanayii Anonim Sirketi, 06980 Ankara (TR)
(72) Inventor: TANLAK, Niyazi, 06980 Ankara (TR)
(74) Representative: Berkkam, Ayfer
(86) International application number: PCT/TR2024/050030
(87) International publication number: WO 2024/155261

(56) References cited:
- WO-A2-2005/035359
- JP-A- S62 241 798

## Description

This invention relates to a canopy movement mechanism that protect canopies on air and/or space vehicles.

Bird strikes are problems in canopies. For this reason, canopies are made of thick materials. The windshields of the canopies are especially produced thicker. It is designed both to protect the pilot and to differentiate the relative speed of a mass such as a bird from the aircraft. Thus, a small part of the bird's energy is transferred to the canopy, especially the canopy crown area. Such a differentiation is related to the windshield angle. A low-angle windshield serves this purpose better. In this case, more field is needed and the weight must be increased. However, reducing the windshield angle is not always possible due to visibility and space problems.

In pressurized cabins, the canopy tends to open outward. In the normal course of the air vehicle, the interfaces that connect the canopy to the body (e.g. hinges, etc.) try to prevent the canopy from opening outward. If the parts at the interface of the canopy and the air vehicle body (airbag, latches, front, side and rear chassis) are designed to allow the canopy to rotate towards the air vehicle on the rotation axis during a bird strike, it reduces the amount of energy transferred from the mass to the canopy. The amount of rotation of the design allows determine the amount of energy reduction.

EP0340961A1, which is included in the known-state of the art, discloses a front canopy panel that deforms and moves locally backwards relative to the body in the event of a bird strike on the front canopy panel. The central connections can move locally rearward relative to the body and rear panel. In a canopy assembly including a rear canopy panel and a forward canopy panel, in which rear portion of the front canopy panel and forward portion of the rear wing are mounted on a support frame, in the event of a frontal impact, the front and rear canopy panels are positioned spaced apart and fixed together to allow relative longitudinal movement.

US4183479A, which is included in the known-state of the art, discloses a front panel that can be moved to change the angle of the windshield. The windshield module is raised and lowered.

EP3007919B1, which is included in the known-state of the art, discloses a fixed panel fixed to a window frame; and a movable panel placed in the window frame planarly adjacent to the fixed panel and configured to move up and down along a sliding direction within the window frame. A spring part can be deformed elastically due to the movement of an L-shaped front slider in a guide groove.

JPS62241798A, which is included in the known-state of the art, discloses raising and lowering a C-cockpit with vertical operating mechanism. The canopy is enabled to float above the body and sink into the upper part of the body. A configuration enables the canopy to move. In the configuration, the guide between the body and the canopy is provided by rollers.

WO2005035359A2, which is included in the known-state of the art, discloses a fastening apparatus for securely attaching injection-molded frameless canopies to aircraft, wherein the system aims to prevent deformation (creep) and cracking (crazing) in plastic components under concentrated loads by utilizing first attachment elements partially embedded in the canopy during molding and second elements connected to the canopy rail to ensure a secure and sealed connection.

Thanks to the canopy mechanism according to the present invention, movement of the canopy mechanism is carried out more reliably.

The canopy mechanism according to the present invention enables a more reliable movement of the canopy when encountered with an obstacle.

Another object of the present invention is to activate the canopies in an air vehicle by means of a lighter system.

A further object of the present invention is to provide a simple, easy-to-use, practical and effective canopy mechanism.

The canopy mechanism realized to achieve the object of the invention, which is defined in the first claim and other claims dependent thereon.

The canopy mechanism realized to achieve the object of the present invention is illustrated in the attached drawings, in which:

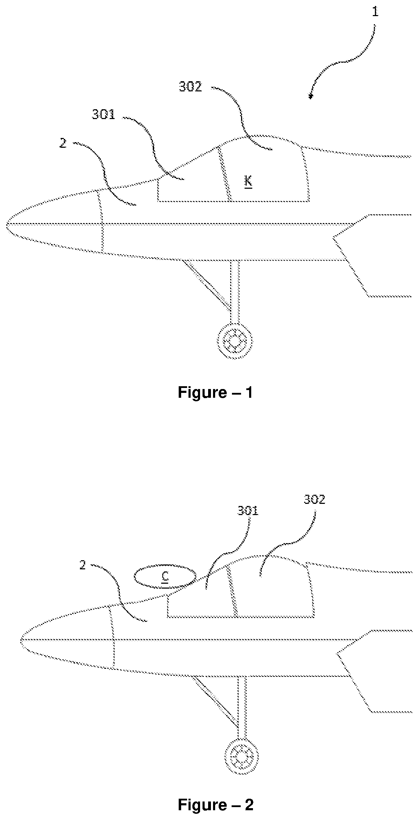

Figure 1 is a schematic view of the canopy mechanism (1) in the first position (I).
Figure 2 is a schematic view of the canopy mechanism (1) in the second position (II).

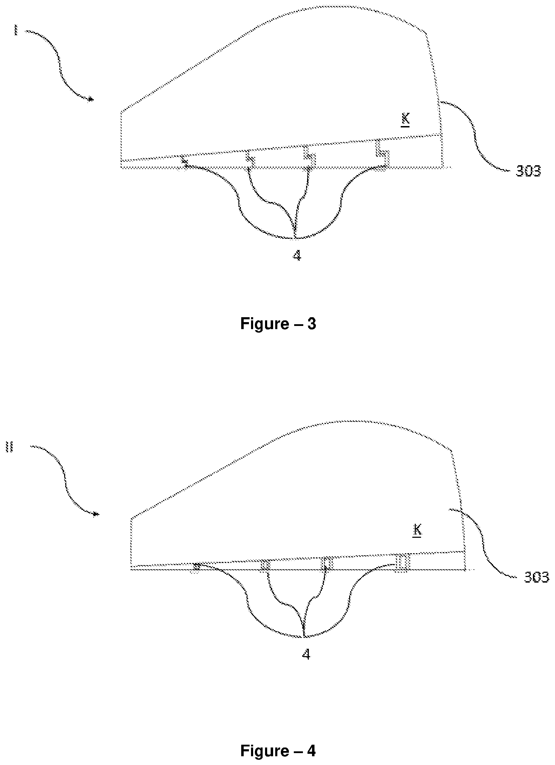

Figure 3 is a schematic view of the bracketed slider (4) in the first position (I).
Figure 4 is a schematic view of the bracketed slider (4) in the second position (II).

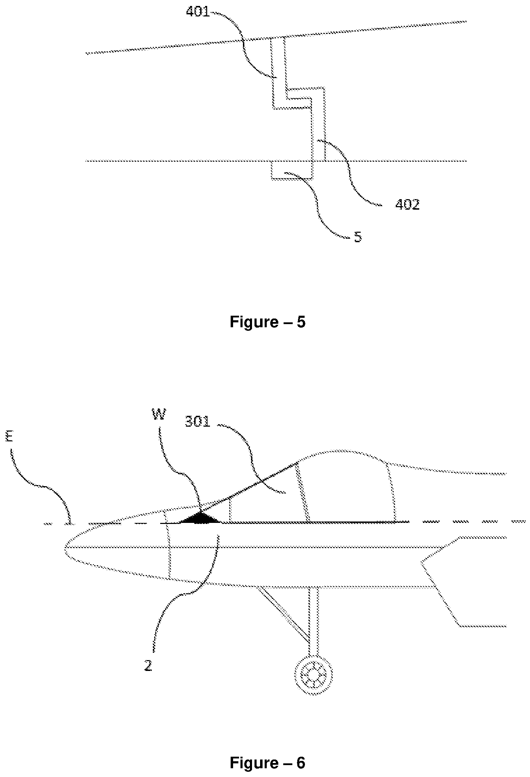

Figure 5 is a sectional view of the bracketed slider (4).
Figure 6 is a schematic view of axis (E) and windshield angle (W).

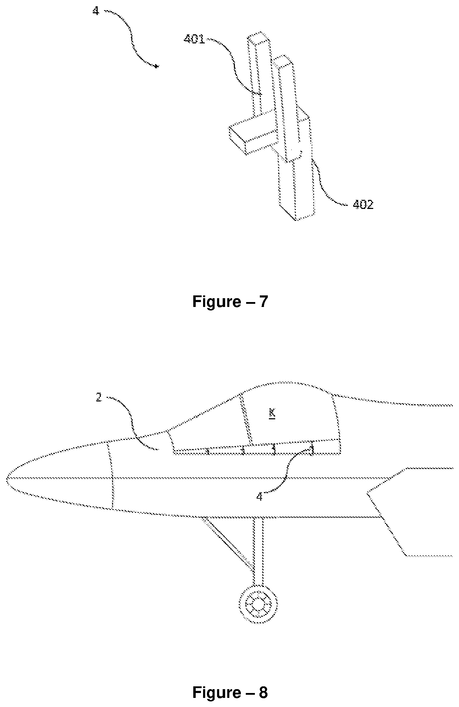

Figure 7 is a schematic view of the bracketed slider (4).
Figure 8 is a schematic view of the canopy mechanism (1) in the first position (I).

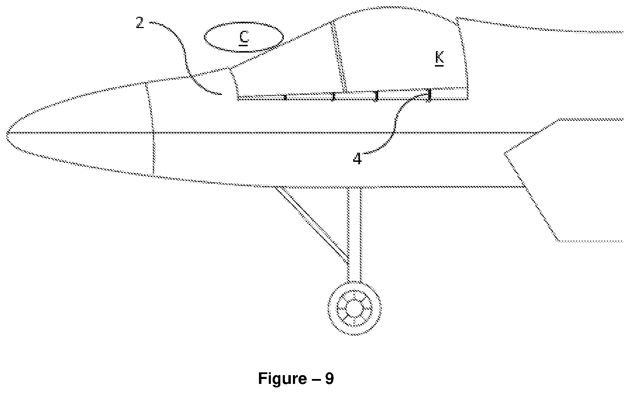

Figure 9 is a schematic view of the canopy mechanism (1) in the second position (II).

All the parts illustrated in figures are individually assigned a reference numeral and the corresponding terms of these numbers are listed below:
1. Canopy Mechanism
2. Body
   301. Windshield
   302. Canopy Crown
   303. Rear Panel
4. Bracketed Slider
   401. First Bracket
   402. Second Bracket
5. Support Element
   (K) Cockpit
   (C) Mass
   (E) Axis
   (W) Windshield Angle
   (I) First Position
   (II) Second Position

The canopy mechanism (1) comprises a body (2) for an air vehicle; a cockpit (K) that is located on the body (2); a canopy that is located on the body (2) so as to move relative to the body (2), , allowing access to the cockpit (K) and , protecting the cockpit (K); a windshield (301) that is located on the canopy, on a side facing the leading edge of the air vehicle; at least one bracketed slider (4) that allows the canopy to be attached to the body (2); a first position (I) in which the canopy is located on the body (2) thanks to the internal pressure of the cockpit (K).

The canopy mechanism (1) according to the invention comprises a second position (II) in which the canopy moves from the first position (I) by sliding into the body (2) when a mass (C) hits the windshield (301); the bracketed slider (4) that enables the canopy to be moved to the second position (II), wherein after the mass (C) ceases to contact the windshield (301), the internal pressure pushes the canopy and brings it back to the first position (I).

Access to the cockpit (K) on the air vehicle is provided by the canopy. The canopy is located on the body (2). It comprises a windshield (301) on the canopy, on a side facing the leading edge that is the first place of the canopy in contact with the air. The attachment of the canopy to the body (2) is provided by at least one bracketed slider (4). It is provided by the internal pressure of the cockpit (K) in a first position (I) in which the canopy is located on the body (2).

In the canopy mechanism (1), when a mass (C) hits the windshield (301), the second position (II) is provided, to which the canopy is moved by sliding into the body (2). After the canopy is moved to the second position (II) and the mass (C) ceases to contact with the windshield (301), the canopy is pushed by the effect of the internal pressure and returned to the first position (I) by the bracketed slider (4). Therefore, the pilot's field of vision is not affected when the mass (C) contacts the canopy. It is ensured that the canopy maintains its position as a result of the impact of the mass (C).

In an embodiment of the invention, the canopy mechanism (1) comprises an axis (E) on the body (2), which is predetermined by the user and extends from the leading edge to the trailing edge; a windshield angle (W) between the windshield (301) and the axis (E); the bracketed slider (4) which makes a sliding movement towards the body (2) and reduces the windshield angle (W), so as to allow the canopy to move from the first position (I) to the second position (II). Thanks to the bracketed slider (4), the canopy is enabled to move between the first position (I) and the second position (II). Thanks to the decrease in the windshield angle (W), the pilot can be protected, and the speed of the mass (C) can be separated from the air vehicle.

In an embodiment of the invention, the canopy mechanism (1) comprises a canopy crown (302) on the canopy, which extends from the windshield (301) towards the trailing edge; a rear panel (303) on the canopy, which extends from the canopy crown (302) towards the body (2); the rear panel (303) having a concave form to facilitate the sliding movement of the canopy that slides towards the body (2) to reach the second position (II). The invention comprises a mechanism that can penetrate as much as the impact force of the mass (C) and thus move gradually, thanks to the canopy sliding on the rear panel (303) to move towards the body (2).

According to the invention, the canopy mechanism (1) comprises a first bracket (401) on the bracketed slider (4); a second bracket (402) in the bracketed slider (4), which is form-compatible with the first bracket (401) to allow the first bracket (401) to slide thereon, wherein the first bracket (401) is curved longitudinally to form a concave form so that the canopy can move towards the interior of the body (2). Thanks to the second bracket (402) in convex form, the first bracket (401) is facilitated to slide on the second bracket (402).

In an embodiment of the invention, the canopy mechanism (1) comprises the first bracket (401) that is located on the canopy; the second bracket (402) that is located on the body (2). The movement of the canopy is enabled by locating the first bracket (401) on the canopy and locating the second bracket (402) on the body (2).

In an embodiment of the invention, the canopy mechanism (1) comprises the first bracket (401) in L-form. Thanks to the protrusion extending out from the first bracket (401), it is enabled to slide on the second bracket (402).

In an embodiment of the invention, the canopy mechanism (1) comprises the second bracket (402) in C-form, which is in contact with the protrusion on the second bracket (402), thus limiting the movement of the first bracket (401), and acting as a stopper for the first bracket (401). The first bracket (401) in L-form is enabled to slide and move on the convex surface of the second bracket (402) in C-form, at least partially in contact with thereto.

In an embodiment of the invention, the canopy mechanism (1) comprises at least one support element (5) which prevents damage to the body (2) and/or bracketed slider by the sliding movement of the first bracket (401) in L-form on the second bracket (402) in C-form, wherein the support element (5) acts as a damper located on the body (2). Thanks to the support element (5), the energy of the first bracket (401) moving with the impact of the mass (C) is at least partially absorbed. Thus, the damage to the body (2) is minimized.

In an embodiment of the invention, the canopy mechanism (1) comprises the bracketed slider (4) allowing the canopy to move from the first position (I) to the second position (II) upon reduction of the windshield angle (W) when the first bracket (401) in U-form makes an angular rotational movement on the second bracket (402) in L-form at a point where they are supported by each other. Thanks to the protrusions extending out from the first bracket (401), it rotates with the second bracket (402) around the point where they are connected to each other, thereby reducing the windshield angle (W).

In an embodiment of the invention, the canopy mechanism (1) comprises the support element (5) made of an elastic material. In this way, energy of the first bracket (401), which moves with the impact effect of the mass (C), is at least partially damped.

In an embodiment of the invention, the canopy mechanism (1) comprises the canopy suitable for use in supersonic air vehicles.

## Claims

1. A canopy mechanism (1) comprising a body (2) for an air vehicle; a cockpit (K) that is located on the body (2); a canopy that is located on the body (2) so as to move relative to the body (2), allowing access to the cockpit (K) and protecting the cockpit (K); a windshield (301) that is located on the canopy, on a side facing the leading edge of the air vehicle; at least one bracketed slider (4) that allows the canopy to be attached to the body (2); the canopy being positionable in a first position (I) in which the canopy is located on the body (2) thanks to the internal pressure of the cockpit (K), **characterized by** the canopy being positionable in a second position (II) in which the canopy moves from the first position (I) by sliding into the body (2) when a mass (C) hits the windshield (301); wherein the bracketed slider (4) enables the canopy to be moved to the second position (II), wherein after the mass (C) ceases to contact the windshield (301), the internal pressure pushes the canopy and brings it back to the first position (I); the canopy mechanism (1) further comprising a first bracket (401) on the bracketed slider (4); a second bracket (402) in the bracketed slider (4), which is form-compatible with the first bracket (401) to allow the first bracket (401) to slide thereon, wherein the first bracket (401) is curved longitudinally to form a concave form and the second bracket (402) is convex, in order to facilitate the sliding of the first bracket (401) on the second bracket (402), so that the canopy can move towards the interior of the body (2).

2. A canopy mechanism (1) according to claim 1, **characterized by** an axis (E) on the body (2), which is predetermined by the user and extends from the leading edge to the trailing edge; a windshield angle (W) between the windshield (301) and the axis (E); the bracketed slider (4) which makes a sliding movement towards the body (2) and reduces the windshield angle (W), so as to allow the canopy to move from the first position (I) to the second position (II).

3. A canopy mechanism (1) according to claim 1 or claim 2, **characterized by** a canopy crown (302) on the canopy, which extends from the windshield (301) towards the trailing edge; a rear panel (303) on the canopy, which extends from the canopy crown (302) towards the body (2); the rear panel (303) having a concave form that enables the sliding movement of the canopy that slides towards the body (2) to reach the second position (II).

4. A canopy mechanism (1) according to claim 4, **characterized by** the first bracket (401) that is located on the canopy; the second bracket (402) that is located on the body (2).

5. A canopy mechanism (1) according to claim 4 or claim 5, **characterized by** the first bracket (401) in L-form.

6. A canopy mechanism (1) according to any of the claims 4 to 6, **characterized by** the second bracket (402) in C-form, which is in contact with the protrusion on the second bracket (402), thus limiting the movement of the first bracket (401), and acting as a stopper for the first bracket (401).

7. A canopy mechanism (1) according to any of the claims 4 to 7, **characterized by** at least one support element (5) which prevents damage to the body (2) and/or bracketed slider by the sliding movement of the first bracket (401) in L-form on the second bracket (402) in C-form, wherein the support element (5) acts as a damper located on the body (2).

8. A canopy mechanism (1) according to claim 1, **characterized by** the bracketed slider (4) allowing the canopy to move from the first position (I) to the second position (II) upon reduction of the windshield angle (W) when the first bracket (401) in U-form makes an angular rotational movement on the second bracket (402) in L-form at a point where they are supported by each other.

9. A canopy mechanism (1) according to claim 8, **characterized by** the support element (5) made of an elastic material.

10. A canopy mechanism (1) according to any of the above claims, **characterized by** the canopy suitable for use in supersonic air vehicles.

## Patentansprüche

1. Ein Kabinendachmechanismus (1), bestehend aus einem Rumpf (2) für ein Luftfahrzeug; einem Cockpit (K), das sich auf dem Rumpf (2) befindet; einem Kabinendach, das sich relativ zum Rumpf (2) bewegen kann, um den Zugang zum Cockpit (K) zu ermöglichen und dieses zu schützen; einer Windschutzscheibe (301), die sich auf dem Kabinendach an der der Vorderkante des Luftfahrzeugs zugewandten Seite befindet; mindestens einen mit einer Halterung versehenen Schieber (4), der die Befestigung des Kabinendachs am Rumpf (2) ermöglicht; **dadurch gekennzeichnet, dass** das Kabinendach dank des Innendrucks des Cockpits (K) in einer ersten Position (I) auf dem Rumpf (2) positioniert werden kann und sich in eine zweite Position (II) bewegt, in der sie sich durch Aufprall einer Masse (C) auf die Windschutzscheibe (301) aus der ersten Position (I) in den Rumpf (2) hineinschiebt, wobei der mit einer Halterung versehene Schieber (4) das Kabinendach in die zweite Position (II) bewegt, wobei, nachdem die Masse (C) den Kontakt zur Windschutzscheibe (301) verliert, der Innendruck das Kabinendach zurück in die erste Position (I) drückt; wobei der Kabinendachmechanismus (1) ferner eine erste Halterung (401) an dem mit einer Halterung versehenen Schieber (4) umfasst; eine zweite Halterung (402) an dem mit einer Halterung versehenen Schieber (4), die formkompatibel mit der ersten Halterung (401) ist, sodass diese darauf gleiten kann, wobei die erste Halterung (401) längsgebogen und konkav und die zweite Halterung (402) konvex ist, um das Gleiten der ersten Halterung (401) auf der zweiten Halterung (402) zu erleichtern, sodass sich das Kabinendach in Richtung des Innenraums des Rumpfes (2) bewegen kann.

2. Ein Kabinendachmechanismus (1) nach Anspruch 1, **dadurch gekennzeichnet, dass** eine Achse (E) am Rumpf (2) vorgesehen ist, die vom Benutzer vorgegeben ist und sich von der Vorderkante zur Hinterkante erstreckt; einen Windschutzscheibenwinkel (W), der zwischen der Windschutzscheibe (301) und der Achse (E) ausgebildet ist; und den gelagerten, mit einer Halterung versehenen Schieber (4), der eine Gleitbewegung in Richtung des Rumpfes (2) ausführt und den Windschutzscheibenwinkel (W) verringert, um die Bewegung des Kabinendachs von der ersten Position (I) in die zweite Position (II) zu ermöglichen.

3. Ein Kabinendachmechanismus (1) nach Anspruch 1 oder 2, **dadurch gekennzeichnet, dass** das Kabinendach einen Kabinendachkopf (302) aufweist, der sich von der Windschutzscheibe (301) zur Hinterkante erstreckt, und eine auf dem Kabinendach angeordnete Rückwand (303) aufweist, die sich vom Kabinendachkopf (302) zu dem Rumpf (2) erstreckt; wobei die Rückwand (303) eine konkave Form aufweist, die es dem Kabinendach ermöglicht, sich zu dem Rumpf (2) hin zu verschieben, um die zweite Position (II) zu erreichen.

4. Ein Kabinendachmechanismus (1) nach Anspruch 4, **dadurch gekennzeichnet, dass** die erste Halterung (401) am Kabinendach und die zweite Halterung (402) am Rumpf (2) angeordnet ist.

5. Ein Kabinendachmechanismus (1) nach Anspruch 4 oder Anspruch 5, **dadurch gekennzeichnet, dass** die erste Halterung (401) L-förmig ist.

6. Ein Kabinendachmechanismus (1) nach einem der Ansprüche 4 bis 6, **dadurch gekennzeichnet, dass** die zweite Halterung (402) C-förmig ist und mit dem Vorsprung an der zweiten Halterung (402) in Kontakt steht, wodurch die Bewegung der ersten Halterung (401) begrenzt wird und die zweite Halterung (402) als Anschlag für die erste Halterung (401) fungiert.

7. Ein Kabinendachmechanismus (1) nach einem der Ansprüche 4 bis 7, **dadurch gekennzeichnet, dass** mindestens ein Stützelement (5) vorgesehen ist, das eine Beschädigung des Rumpfes (2) und/oder des mit einer Halterung versehenen Schiebers (4) durch die Gleitbewegung der ersten, L-förmigen Halterung (401) auf der zweiten, C-förmigen Halterung (402) verhindert, wobei das Stützelement (5) als am Rumpf (2) angeordnetes Dämpfungselement wirkt.

8. Ein Kabinendachmechanismus (1) nach Anspruch 1, **dadurch gekennzeichnet, dass** der mit einer Halterung versehene Schieber (4) eine Bewegung des Kabinendaches aus der ersten Position (I) in die zweite Position (II) bei Verringerung des Windschutzscheibenwinkels (W) ermöglicht, wenn die U-förmige erste Halterung (401) eine winklige Drehbewegung gegenüber der L-förmigen zweiten Halterung (402) an einem Punkt ausführt, an dem sie sich gegenseitig abstützen.

9. Ein Kabinendachmechanismus (1) nach Anspruch 8, **dadurch gekennzeichnet, dass** das Stützelement (5) aus einem elastischen Material besteht.

10. Ein Kabinendachmechanismus (1) nach einem der vorstehenden Ansprüche, **dadurch gekennzeichnet, dass** das Kabinendach für die Verwendung in Überschall-Luftfahrzeugen geeignet ist.

## Revendications

1. Mécanisme de verrière (1) comprenant un corps (2) destiné à un véhicule aérien ; un poste de pilotage (K) disposé sur le corps (2) ; une verrière disposée sur le corps (2) de manière à pouvoir se déplacer par rapport au corps (2), permettant l'accès au poste de pilotage (K) et protégeant le poste de pilotage (K) ; un pare-brise (301) disposé sur la verrière, du côté faisant face au bord d'attaque du véhicule aérien ; au moins un coulisseau à supports (4) permettant de fixer la verrière au corps (2) ; la verrière pouvant être positionnée dans une première position (I) dans laquelle la verrière est disposée sur le corps (2) sous l'effet de la pression interne du poste de pilotage (K) ; **caractérisé en ce que** la verrière peut être positionnée dans une seconde position (II) dans laquelle, lorsqu'une masse (C) heurte le pare-brise (301), la verrière se déplace depuis la première position (I) en coulissant vers l'intérieur du corps (2) ; le coulisseau à supports (4) permettant de déplacer la verrière vers la seconde position (II), dans lequel, après que la masse (C) cesse d'être en contact avec le pare-brise (301), la pression interne pousse la verrière et la ramène à la première position (I) ; le mécanisme de verrière (1) comprenant en outre un premier support (401) disposé sur le coulisseau à supports (4) ; un second support (402) disposé dans le coulisseau à supports (4), présentant une forme complémentaire de celle du premier support (401) de manière à permettre au premier support (401) de coulisser sur celui-ci, dans lequel le premier support (401) est incurvé longitudinalement de manière à présenter une forme concave et le second support (402) présente une forme convexe, afin de faciliter le coulissement du premier support (401) sur le second support (402), de sorte que la verrière puisse se déplacer vers l'intérieur du corps (2).

2. Mécanisme de verrière (1) selon la revendication 1, **caractérisé en ce qu'**un axe (E), prédéterminé par l'utilisateur et s'étendant du bord d'attaque au bord de fuite, est prévu sur le corps (2) ; un angle de pare-brise (W) est défini entre le pare-brise (301) et l'axe (E) ; et le coulisseau à supports (4) effectue un mouvement de coulissement vers le corps (2) et réduit l'angle de pare-brise (W), permettant ainsi à la verrière de passer de la première position (I) à la seconde position (II).

3. Mécanisme de verrière (1) selon la revendication 1 ou la revendication 2, **caractérisé en ce qu'**une partie supérieure de verrière (302), s'étendant depuis le pare-brise (301) vers le bord de fuite, est disposée sur la verrière ; un panneau arrière (303), s'étendant depuis la partie supérieure de verrière (302) vers le corps (2), est disposé sur la verrière ; et le panneau arrière (303) présente une forme concave permettant le mouvement de coulissement de la verrière vers le corps (2) afin d'atteindre la seconde position (II).

4. Mécanisme de verrière (1) selon la revendication 4, **caractérisé en ce que** le premier support (401) est disposé sur la verrière et le second support (402) est disposé sur le corps (2).

5. Mécanisme de verrière (1) selon la revendication 4 ou la revendication 5, **caractérisé en ce que** le premier support (401) présente une forme en L.

6. Mécanisme de verrière (1) selon l'une quelconque des revendications 4 à 6, **caractérisé en ce que** le second support (402) présente une forme en C et est en contact avec la saillie disposée sur le second support (402), limitant ainsi le mouvement du premier support (401) et faisant office de butée pour le premier support (401).

7. Mécanisme de verrière (1) selon l'une quelconque des revendications 4 à 7, **caractérisé en ce qu'**au moins un élément de support (5) empêche que le corps (2) et/ou le coulisseau à supports (4) ne soient endommagés par le mouvement de coulissement du premier support (401) en forme de L sur le second support (402) en forme de C, l'élément de support (5) faisant office d'amortisseur disposé sur le corps (2).

8. Mécanisme de verrière (1) selon la revendication 1, **caractérisé en ce que** le coulisseau à supports (4) permet à la verrière de passer de la première position (I) à la seconde position (II) par réduction de l'angle de pare-brise (W), lorsque le premier support (401) en forme de U effectue un mouvement de rotation angulaire sur le second support (402) en forme de L, en un point où ils prennent appui l'un sur l'autre.

9. Mécanisme de verrière (1) selon la revendication 8, **caractérisé en ce que** l'élément de support (5) est réalisé en un matériau élastique.

10. Mécanisme de verrière (1) selon l'une quelconque des revendications précédentes, **caractérisé en ce que** la verrière est adaptée à une utilisation dans des véhicules aériens supersoniques.
